# EUROPEAN PATENT APPLICATION

(11) **EP 1 048 337 A1**
(43) Date of publication of application: **02.11.2000**
(21) Application number: 99303318.2
(22) Date of filing: 28.04.1999
(51) Int. Cl.: B01D 53/22, B01D 53/04, F25J 3/02, F25J 3/08

(54) **Recovery of perfluorinated compounds from the exhaust of semiconductors fabrications with recycle of vaccum pump dilutent**

(71) Applicant: AIR PRODUCTS AND CHEMICALS, INC., Allentown, PA 18195-1501 (US)
(72) Inventor: Chernyakov, Losif, Fort Lee, NJ 07024 (US); Schwarz, Alexander, Bethlehem, PA 18015 (US); Hsiung, Thomas Hsiao-Ling, Emmaus, PA 18049 (US); Yang, James Hsu-Kuang, Allentown, PA 18103 (US)
(74) Representative: Burford, Anthony Frederick

(57) **Abstract**

Fluorochemicals are separated and recovered from a feed gas stream (12, Fig.1; 50, Fig. 2; 80, Fig. 3) containing a diluent gas and fluorochemicals by a process in which recycled diluent-rich stream(s) (26,32; 62,70; 92) from the separation step(s) provide vacuum pump diluent for a vacuum pump (14; 52; 82) through which the feed gas stream is pumped prior to compression (20; 58; 86). In one embodiment (Fig. 1), the compressed gas mixture is separated in a membrane system (24) in one or more stages, where the membrane(s) is selectively more permeable to the diluent gas than the fluorochemicals, to result in a recycle permeate stream (26) rich in diluent gas and retentate (28) rich in fluorochemicals, and thereafter the retentate (28) is purified by distillation or adsorption resulting in a product stream (34) enriched in fluorochemicals and a recycle purified diluent stream (32). In another embodiment (Fig. 2), the compressed gas mixture is separated by adsorption (60) and subsequent distillation (68) and recycle vacuum pump diluent is provided by the vent stream (62) from the adsorption (60) and purified diluent (70) from the distillation (68). In a third embodiment (Fig. 3), the compressed gas mixture is separated by cryogenic distillation (68) and the resultant enriched diluent stream (92) recycled.

## Description

The semiconductor industry uses fluorinated gases, such as carbon tetrafluoride and hexafluoroethane, as etchants and cleaning gases in semiconductor manufacturing processes. These gases do not fully react within the reaction chamber. The unused gases enter the atmosphere through the process effluent from such reactors and have long persistence in the atmosphere and absorb infrared radiation. These gases absorb infrared radiation and are, therefore, potential global warming gases. The industry has sought ways to diminish the amount of fluorinated gases reaching the atmosphere and ways to recycle such gases particularly in light of their low utilisation on a single pass basis for their intended etching and cleaning purposes.

Fluorochemicals, such as perfluorinated hydrocarbons and perfluorinated chemicals, are used in the semiconductor industry as safe and noncorrosive sources of fluorine. In plasma environments, fluorochemicals, such as fluorinated gases, form fluorine species which are capable of etching wafers or cleaning insides of reactor chambers. The gaseous products of the etching or cleaning process are exhausted from the reactor chamber to the scrubber or vent systems of the semiconductor fabrication plant with potential for venting to atmosphere. Consumption of fluorinated gases in the reaction chamber products is not complete. Experiments have shown that in some cases less than 10% of hexafluoroethane is used.

Abatement of fluorochemicals currently follows several techniques. One method currently used by the semiconductor industry for ensuring that fluorochemicals are not released to the environment involves combustion of the fluorochemicals contained in an effluent stream. While this method effectively destroys the fluorochemicals, thus preventing environmental pollution, it also makes it impossible to reuse the fluorochemicals. This method is also disadvantageous because it generates waste gases, such as hydrogen fluoride and nitrogen oxides, which require further treatment. Furthermore, combustion processes require fuel and oxygen to operate, adding additional operating and capital cost to the semiconductor and manufacturing operation.

Alternatively, these fluorochemicals can be recovered for reuse. Several schemes have been published in the literature to capture these chemicals. Glenn M. Tom, et al. in the article *"PFC Concentration and Recycle",* Mat. Res. Soc. Symp. Proc. Vol. 344, 1994, pp 267-272 describes a process for concentrating perfluorinated gases using carbon-containing adsorptive beds. This process requires considerable energy demands based upon pressurisation and depressurisation to maintain a continuous process in switching adsorptive beds.

US-A-5,502,969 discloses a process using a mass transfer contact zone with a wash liquid and one or more stages of cryogenic distillation to recover fluorine compounds from a carrier gas such as those constituting an effluent stream from a semiconductor facility. Both cryogenics and adsorption comprise energy-intensive and capital-intensive separatory processes.

Denis Rufin in a presentation at a semiconductor PFC workshop in Austin, Texas, February 7, 1996, presented a process for recycling perfluorochemicals from a process tool exhaust. The process involves compression, wet and dry scrubbing, additional compression, filtration, a concentration step followed by condensation and packaging for recycle after offsite purification, certification and additional repackaging. The perfluorocarbon concentration unit disclosed in the process sequence was not identified. Rufin made a similar presentation at Semicon West, *PFC CAPTURE ALPHA SYSTEMS TESTING UPDATE,* 1996, pp 49-54.

US-A-4,119,417 discloses a process wherein a feed gas stream is passed over two cascade-connected semi-permeable membranes with the permeate stream from the second membrane being recycled to the feed gas prior to the first membrane. The process is typified by a separation of nitrogen from krypton. Other gases which can be separated from various binary mixtures include hydrogen, helium, nitrogen, oxygen, air, neon, argon, krypton, xenon, radon, fluorine, chlorine, bromine, uranium hexafluoride, ozone, hydrocarbons, sulphur dioxide, vinyl chloride, acrylonitrile and nitrogen oxides. The membranes utilised for these separations include silicon rubber, polybutadiene rubber, polyethylene, tetramethyl pentane resin, cellulose acetate, ethyl cellulose, Nuclear Pore, a material produced by General Electric, tetrafluoroethylene, polyester and porous metal membranes.

US-A-4,654,063 discloses a process for conducting hydrogen purification using a semi-permeable membrane along with a non-membrane type separation wherein the retentate from the membrane can be further processed in a cryogenic or adsorptive separation system.

US-A-4,701,187 discloses the use of cascade membranes wherein the retentate from a first membrane is conducted to a second membrane and the retentate from the second membrane is conducted to a downstream further adsorptive separation for product recovery. The permeate from the second membrane is recycled to the feed of the first membrane.

Air Products and Chemicals, Inc. and Radian International L.L.C. publicised a process titled *PFC Recovery* Systems *for the Electronics Industry,* 1996, Publication No. 325-95410 depicting a process wherein a mixture of vacuum pump diluent and fluorinated gases from a process tool of a semiconductor fabrication facility passes through a guard bed and a wet scrubber followed by gas compression, drying and adsorption with recycle of a portion of the purified diluent from the adsorbers to before the gas compression, while the more concentrated fluorinated gases pass through further gas compression, condensation and distillation to recover a product, such as 99.9+% hexafluoroethane. The process can be designed to recover hexafluoroethane, carbon tetrafluoride, trifluoromethane, nitrogen trifluoride and sulphur hexafluoride.

Rautenbach, et al., Gas Permeation-Module Design and Arrangement, Chem. Eng. Process, 21, 1987, pp. 141-150 discloses various membrane arrangements for gas separation.

EP-A-0 754 487 discloses a process for recovery perfluorinated compound from a gas mixture using a combination of membranes and distillation to recover the perfluorinated components. The permeate stream from the membrane unit(s) is recycled as feed to the membrane unit. There is no disclosure relating to using the permeate stream as a vacuum pump diluent.

Additional patents of interest include US-A-4,180,388, US-A-4,894,068, US-A-5,240,471 and US-A-5,252,219.

The prior art, although addressing the problem of capture and recycle of fluorochemicals used in the semiconductor industry, such as perfluorinated compounds and more specifically perfluorocarbons, has failed to provide a low capital cost, low energy-intensive process for the capture and concentration of the desired fluorinated compounds as is achieved by the present invention, which will be set forth in greater detail below.

The present invention provides a process for the separation and recovery of a fluorochemical from a feed gas stream containing a diluent gas and the fluorochemical comprising pumping the feed gas stream through a vacuum pump using a vacuum pump diluent, compressing the diluted feed gas stream and separating the compressed gas into one or more diluent-rich streams and a fluorocarbon-rich stream, characterised in that said vacuum pump diluent comprises at least one of said diluent-rich streams.

In a first aspect, the compressed gas mixture is separated in a membrane system in one or more stages, where the membrane(s) is selectively more permeable to the diluent gas than the fluorochemicals, to result in a recycle permeate stream rich in diluent gas and retentate rich in fluorochemicals, and thereafter the retentate is purified by distillation or adsorption resulting in a product stream enriched in fluorochemicals and a recycle purified diluent stream, said recycle streams being recycled to the vacuum pump.

In a second aspect, the compressed gas mixture is separated by adsorption and subsequent distillation and a vent stream from the adsorption and purified diluent from the distillation are recycled to the vacuum pump.

In a third aspect, the compressed gas mixture is separated by cryogenic distillation and the resultant enriched diluent stream recycled to the vacuum pump.

According to a preferred embodiment of the first aspect of the present invention, a process for the separation and recovery of a fluorochemical from a feed gas stream containing a diluent gas and the fluorochemical by contact of the gas stream with a membrane, comprises the steps of:
(i) pumping the feed gas stream through a vacuum pump using a vacuum pump diluent;
(ii) compressing the diluted feed gas stream to an elevated pressure;
(iii) contacting the compressed gas stream with a membrane system containing one or more stages to produce a permeate stream rich in the diluent gas and a retentate rich in the fluorochemical;
(iv) purifying the retentate by a process selected from distillation and adsorption to produce a product stream richer in fluorochemical and a recycle stream rich in diluent gas
(v) recycling the permeate stream and the recycle stream to the vacuum pump.

The membrane separation of step (iii) preferably is conducted at an elevated temperature sufficient to increase the flux of the permeate stream and to increase the membrane selectivity for the permeation of the diluent gas relative to the permeation of the fluorochemical. Suitably, the elevated temperature is provided by heating the diluted feed stream.

The present invention also provides a process for the separation and recovery of a fluorochemical from a feed gas stream containing a diluent gas and the fluorochemical by contact of the gas stream with a membrane, comprising the steps of:
(a) compressing said gas stream to an elevated pressure;
(b) heating the gas stream to an elevated temperature sufficient to increase the flux of the permeate stream of step (c) and to increase the selectivity of the membrane of step (c) for the permeation of the diluent gas relative to the permeation of the fluorochemical;
(c) contacting the gas stream with a membrane system containing one or more stages to produce a permeate stream rich in the diluent gas and a retentate rich in the fluorochemical;
(d) purifying the retentate by a process selected from distillation and adsorption to produce a product stream richer in fluorochemical and a recycle stream rich in diluent gas
(e) recycling the permeate stream and the recycle stream to the vacuum pump as the diluent gas which is combined with the feed gas stream containing diluent gas and the fluorochemical, the combined stream, after scrubbing, being the stream supplied to step (a) to be compressed to an elevated pressure.

Suitably, the membranes are selected from polysulphone, polyetherimide, polypropylene, cellulose acetate, polymethylpentane, amorphous copolymers based on 2,2-bistrifluoromethyl-4,5-difluoro-1,3-dioxole, polyvinyltrimethylsilane, polyimide, polyamide, polyaramide, ethyl cellulose and mixtures thereof.

The invention is advantageous to carrying out the purifying step by distillation.

A preferred embodiment of the second aspect is a process for the separation and recovery of a fluorochemical from a feed gas stream containing a diluent gas and the fluorochemical by contact of the gas stream with an adsorption unit, comprising the steps of:
(i) pumping the feed gas stream through a vacuum pump using a vacuum pump diluent;
(ii) compressing the diluted gas stream to an elevated pressure;
(iii) passing said compressed gas stream through an adsorption system having one or more stages, and containing an adsorbent of the type to adsorb said fluorochemical leaving a purified vent stream rich in said diluent gas;
(iv) desorbing said fluorochemicals from said adsorbent to produce a fluorochemical-rich stream;
(v) compressing said fluorochemical-rich stream;
(vi) purifying said compressed fluorochemical-rich stream by distillation to produce a fluorochemical product stream and a diluent-rich recycle stream; and
(vii) recycling said vent stream and said diluent-rich recycle stream to the vacuum pump.

In another embodiment the invention is a process for the separation and recovery of a fluorochemical from a feed gas stream containing a diluent gas and the fluorochemical by contact of the gas stream with an adsorbent, comprising the steps of:
(a) compressing said gas stream to an elevated pressure;
(b) passing said compressed gas stream through an adsorption system containing one or more stages containing an adsorbent of the type to adsorb said fluorochemical leaving a purified vent stream rich in said diluent gas;
(c) desorbing said fluorochemical from said adsorbent to produce a fluorochemical-rich stream;
(d) compressing said fluorochemical-rich stream;
(e) purifying said compressed fluorochemical-rich stream by distillation to produce a fluorochemical product stream and a diluent-rich recycle stream; and
(f) recycling said vent stream and said diluent-rich recycle stream to the vacuum pump as the diluent gas which is combined with the feed gas stream , the combined stream, after scrubbing being the stream supplied to step (a) to be compressed to an elevated pressure.

Preferably the process of the invention uses an adsorption system which is one of pressure-swing, vacuum-swing or temperature-swing.

A preferred embodiment of the third aspect of the present invention is a process for the separation and recovery of a fluorochemical from a gas stream containing a diluent gas and the fluorochemical by distillation, comprising the steps of:
(i) pumping the feed gas stream through a vacuum pump using a vacuum pump diluent;
(ii) compressing the dilute feed gas stream to an elevated pressure;
(iii) liquefying said compressed gas stream by heat exchange in a cryogenic distillation unit;
(iv) separating a diluent-rich stream from a product stream rich in fluorochemicals by cryogenic distillation;
(v) withdrawing said diluent-rich stream from said distillation step and recycling said diluent-rich stream to the vacuum pump; and
(vi) withdrawing said stream rich in the fluorochemical from said distillation step as a product stream.

In yet another embodiment the invention is a process for the separation and recovery of a fluorochemical from a feed gas stream containing a diluent gas and the fluorochemical by distillation, comprising the steps of:
(a) compressing said gas stream to an elevated pressure;
(b) liquefying said compressed gas stream by heat exchange in a cryogenic distillation unit;
(c) separating a diluent-rich stream from a product stream rich in the fluorochemical by cryogenic distillation;
(d) withdrawing said diluent-rich stream from said distillation step and recycling said diluent-rich stream to the vacuum pump as the diluent gas which is combined with the feed gas stream, the combined stream, after scrubbing being the stream supplied to step (a) to be compressed to an elated pressure; and
(e) withdrawing said stream rich in the fluorochemical from said distillation step as a product stream.

The process of the invention includes an optional step wherein the feed gas stream is initially scrubbed to remove particulates and water soluble components of the gas stream.

The process of the invention is preferably applied to a gas stream containing a diluent gas and fluorochemicals selected from NF₃, SF₆, CF₄, CHF₃, CH₃F, C₂F₆, C₂HF₅, C₃F₈, C₄F₈ and mixtures thereof.

The process of the invention is advantageously applied to a gas stream containing a diluent gas and fluorochemicals which is an effluent gas stream from a semiconductor fabrication process.

The present invention relates to processes to recover fluorochemicals, such as NF₃, SF₆, CF₄, CHF₃, CH₃F, C₂F₆, C₂HF₅, C₃F₈, C₄F₈ and mixtures thereof from the exhausts of semiconductor fabrication facilities. These types of gases are used for etching and cleaning operations in the fabrication of various electronic devices from electronic materials, including the construction of integrated circuits. These gases typically have low utilisation in any given process cycle; therefore, the effluent from the processes will contribute to the environmental concern of global warming. In addition, these gases have considerable value if they can be concentrated, purified and recycled for additional utilisation.

The present invention, in one embodiment, achieves the capture, recovery and purification for potential recycle of the fluorochemicals described above, wherein the exhaust stream from a semiconductor fabrication facility which is typically rich in vacuum pump diluent, such as nitrogen or other inert gas, is sent, after compression and scrubbing, to an optional heating zone to elevate the temperature of the gas stream containing a diluent gas and fluorochemicals and then introduced into a membrane system containing one or more stages where the membrane(s) are more permeable to the diluent gas than the fluorochemicals in the gas stream so as to separate the diluent gas from the fluorochemical gas components. This produces a permeate stream rich in vacuum pump diluent and a retentate which is rich in the fluorochemicals.

The retentate, comprising an enriched stream of fluorochemicals is sent to a purification station while the permeate stream, rich in diluent gas is recycled to the vacuum pump.

Preferably, all membrane stages are operated at elevated temperature to increase the flux of diluent gas through the membrane, while increasing the selectivity between the diluent gases and the fluorochemical gas components.

Depending upon the makeup of the feed gas stream containing diluent gas and fluorochemicals, two or more stages of cascade connected membranes may be utilised, wherein the fluorochemical desired for recovery is concentrated by the membrane and the diluent gas permeates through at a high rate of flux and with greater selectivity at elevated temperature for recycle to the vacuum pump.

The final retentate from the membrane separation, wherein the fluorochemicals are concentrated, is then further processed for higher purification in a typical distillation or adsorptive separation system prior to being used as a recycled product for reutilization by the semiconductor fabrication industry or particularly the particular process from which the fluorochemicals were taken as an effluent stream.

The membrane material may be comprised of polysulphone, polyetherimide, polypropylene, cellulose acetate, polymethylpentane, amorphous copolymers based on 2,2-bistrifluoromethyl-4,5-difluoro-1,3-dioxole, polyvinyltrimethylsilane, polyimide, polyamide, polyaramide or ethyl cellulose polymer, all of which can be configured in hollow fibre, spiral wound or flat sheet geometries.

It has been unexpectedly ascertained that in conducting the membrane separation of fluorochemicals from diluent gases, such as nitrogen and helium, the operation of the membrane at elevated temperature has the surprising effect of not only increasing the flux rate or the permeance of the diluent gas through the membrane, but also increasing the selectivity between the diluent gas, such as nitrogen, and the fluorochemicals. Traditionally, elevated temperatures increase flux rates of the designed permeating stream, but at the risk of reducing selectivity, whereby the designed retentate species also copermeates at an increased permeance or flux rate.

The unique circumstance of increasing the temperature at which the membrane operates, such as by heating the feed gas stream to the membrane, when separating the gas mixtures typically found in semiconductor fabrication clean or etching effluents containing fluorochemicals, results in increased flux or permeance rates for the diluent gas, such as nitrogen while also unexpectedly increasing the selectivity between the diluent gas and the retentate or fluorochemicals, such as the fluorochemicals and perfluorochemicals mentioned above. This unexpected finding provides enhanced operational performance of the present invention, whereby increased throughput can be provided at the cost of heat energy while providing even greater selectivity and, therefore, downstream purity of the fluorochemicals captured and isolated for recovery and potential reutilization.

The present invention contemplates using a plurality of series cascade-connected membranes, wherein the retentate from each membrane constitutes the feed to the ensuing membrane. The permeate stream comprising diluent gas and a small fraction of fluorochemicals would typically be recycled to the vacuum pump to capture fluorochemicals desired for concentration, recertification and reutilization in the process of the present invention.

Elevated pressure contemplated for the separation of the present invention typically would be a pressure greater than 70 psig (475 kPa) and more preferably pressures of 100-200 psig (700-1400 kPa). The temperatures to which the process may be subjected to achieve the enhanced performance characteristics of increased permeate flux and increased selectivity between the permeate and the retentate would be temperatures above ambient, typically 100-200°F (35-95°C) and preferably approximately 150°F (65°C).

The following is a description by way of example only and with reference to the accompanying drawings of presently preferred embodiments of the invention. In the drawings:-
Fig. 1 is a schematic illustration of a first embodiment of the present invention;
Fig. 2 is a schematic illustration of a second embodiment of the present invention; and
Fig. 3 is a schematic illustration of a third embodiment of the present invention.

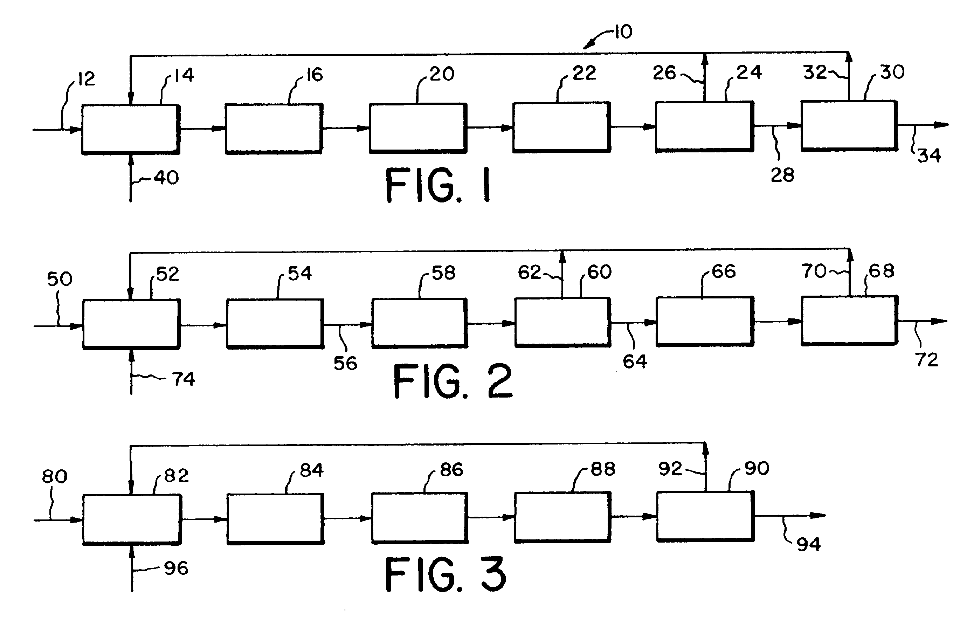

Referring to Fig. 1 wherein the process is generally designated as 10, a fluorochemical-containing exhaust gas 12 from a semiconductor fabrication facility conducting an etch or clean process step comprises a diluent gas, such as nitrogen, and fluorochemicals comprising potentially NF₃, SF₆, CF₄, CHF₃, CH₃F, C₂F₆, C₂HF₅, C₃F₈, C₄F₈, HF, F₂ and mixtures of these gases. Additional components in this mixture include; CO, CO₂, H₂O, O₂, CH₄, SiF₄, SiH₄, COF₂, N₂O, NH₃, O₃, Ar, Br₂, BrCl, CCl₄, Cl₂, H₂, HBr, HCl, He and SiCl₄. This gas mixture is typically removed via a vacuum pump 14 from the semiconductor fabrication facility. The gas stream potentially contains particulates which are filtered out. Other components which are amenable to wet and dry scrubbing are removed in station 16, which typically removes soluble fluorides such as fluorine, hydrogen fluoride and carbonyl fluoride. The wet scrubbing would typically be an aqueous scrubbing solution which removes the soluble fluorides.

The scrubbed gas stream is sent to compressor 20 to be compressed to a pressure greater than 70 psig (475 kPa), and preferably in range of 100-200 psig (700-1400 kPa). The gas stream at elevated pressure is then further heated in indirect heat exchanger 22 against any elevated temperature process stream, such as a process stream for the semiconductor manufacturing facility or a heater or export steam from any given process. The gas stream containing diluent gas and fluorochemicals is heated to a temperature above ambient, typically below 200°F (95°C) or any temperature below the decomposition of the membrane stages yet to be contacted and preferably 100-200°F (35-95°C), most preferably approximately 150°F (65°C)

The feed gas stream then contacts a semi-permeable membrane system 24 wherein the diluent gas, such as nitrogen, and a certain amount of fluorochemicals in low quantities or low concentrations permeate with increased selectivity between the two due to the elevated temperature to become a permeate stream in line 26 which is recycled to the vacuum pump 14 for reintroduction into the membrane system 24.

The retentate (i.e. stream which does not permeate the semi-permeable membrane) of system 24 is removed as stream 28 with an enriched content of the fluorochemicals. The stream enriched in fluorochemicals 28 is then sent to a purification unit 30 which may be an adsorption system of the pressure-swing, vacuum-swing or temperature-swing type utilising carbon, polymeric, zeolitic adsorbents and have one or more stages. The purified diluent from the purification unit in line 32 is combined with the permeate stream from the first stage of the membrane system 24 in line 26 and recycled to the vacuum pump 14 for reintroduction into the membrane system. Alternatively a portion of the diluent stream 32 may be used as a purge for desorption of the fluorochemicals from the adsorptive bed in the purification unit 30 with the other portion being recycled to the vacuum pump. The purge stream from the adsorption unit 30 is considered to be a product stream enriched in fluorochemical content and can be combined with the desorption stream as product stream 34. If necessary, the product stream 34 can be further purified. In this case, any diluent-rich streams produced by further purification can also be recycled to the vacuum pump. Make-up vacuum pump diluent in line 40 is delivered to the vacuum pump on an as needed basis.

Product as stream 34 may be recycled back to the semiconductor process. It is also within the scope of the present invention to take the product stream 34 and send it to a purification station (not shown) which can be operated to produce a fluorochemical product which typically could comprise 99.9% hexafluoroethane and a by-product stream which could contain other fluorochemical gases, such as carbon tetrafluoride.

Various purification processes can be contemplated, but a preferred process would be a distillation process utilising liquid nitrogen cryogenic fluid to operate the overhead condenser of a distillation column to provide reflux to the column, while heating by any traditional means could provide reboil to a column, wherein the column is operated initially to purify carbon tetrafluoride from inert gases, such as nitrogen, and subsequently the column is operated to remove hexafluoroethane from the sump of the distillation column to provide high purity gaseous hexafluoroethane product for repackaging and recycle.

It is possible to configure the process to produce carbon tetrafluoride, carbon hexafluoroethane, trifluoromethane, octafluoropropane, octafluorobutane, nitrogen trifluoride or sulphur hexafluoride, which are all widely used gases comprising fluorochemicals in etch and clean processes of the semiconductor fabrication industry. An important aspect of the first embodiment of the present invention is the preferred use of elevated temperatures in a membrane separation to separate inert diluent gases from fluorochemicals. Typically, elevated temperatures increase flux at the loss of selectivity. However, it has been found that not only does the flux of the permeate stream increase, but the selectivity between the diluent gas and the fluorochemical is increased given the elevated temperatures and the membranes amenable to separating diluent inert gases, such as nitrogen, from fluorochemicals, such as hexafluoroethane. A preferred membrane system is such as described in US-A-5730779.

A second embodiment of the invention is illustrated in Fig. 2, wherein a fluorochemical containing exhaust gas 50 from a semiconductor fabrication facility conducting an etch or clean process step comprises the same materials described in relation to stream 12 above. The gas mixture in stream 50 is typically removed via a vacuum pump 52 from the semiconductor fabrication facility. As with stream 12 described above, gas stream 50 potentially contains particulates which are filtered out. Other components which are amenable to wet and dry scrubbing are removed in a scrubbing station 54.

The scrubbed gas stream in line 56 is sent to a compressor 58 to be compressed to a pressure greater than 30 psia (200 kPa) and preferably in a range of 45 to 735 psia (300-5075 kPa). The pressurised gas stream is then sent to an adsorption system 60 which can be of the pressure-swing, vacuum-swing or temperature-swing type employing carbon, polymeric, or zeolitic adsorbents comprised of one or more stages. The purified diluent recovered from the adsorption system in line 62 can be recycled to the vacuum pump 52 for reintroduction into the process and into the adsorption system. Alternatively, a portion of the diluent in line 62 can be used to purge the stream 64 enriched in fluorochemicals from the adsorption system 60. The fluorochemicals-enriched stream 64 is then compressed in compressor 66 to a pressure greater than 14.7 psia (1 bar) and the pressurised stream sent to a distillation station 68 where an enriched diluent stream 70 and a fluorochemical product stream 72 are recovered. The diluent-rich stream 70 is combined with the diluent stream 62 and returned to the vacuum pump for reintroduction into the process. Make-up diluent is introduced through line 74 on an as needed basis.

Fig. 3 illustrates a third embodiment according to the present invention for treating a fluorochemical-containing exhaust gas 80 from the semiconductor fabrication facility. As in the case of feed streams 12 and 50, the stream 80 is typically removed from the semiconductor fabrication facility via a vacuum pump 82 and is subject to particulate removal, and then wet and dry scrubbing in scrubber 84. Thereafter the stream is compressed in a compressor 86 to a pressure of greater than 14.7 psia (1 bar), preferably between 22 and 88 psia (150 and 605 kPa), and thereafter sent to a heat exchanger 88 wherein the temperature of the stream is reduced to less than -50°F (-45 °C) preferably in the range of between -100°F (-70 °C) and -180°F (-120°C). The cooled stream is then sent to a distillation unit 90 where a diluent-rich recycle stream 92 and a fluorochemical enriched product stream 94 are produced. As with the previous processes, the diluent-rich stream from the distillation unit is recycled to the vacuum pump. Provision is made by a conduit 96 to introduce make-up vacuum pump diluent on an as needed basis.

Thus, according to the present invention, processes are disclosed which permit recovery of perfluorinated compounds (PFC's) such as NF₃, CHF₃, CF₄, C₂F₆, and SF₆ from the exhaust of semiconductor fabrication facilities while recycling the vacuum pump diluent back to the vacuum pump. After scrubbing of the toxic gases from the exhaust stream and compression of the resulting stream, the stream can undergo one of the following separation and/or purification processes. These are: (1) passing the stream through a membrane system consisting of one or more stages at ambient or, preferably, elevated temperature with a permeate from the membrane system recycled back to the vacuum pump while the retentate stream containing fluorochemicals (PFC's) is purified by a further purification step of distillation or adsorption, with the diluent-rich stream from this purification recycled back to the vacuum pump; (2) passing the stream through an adsorption system consisting of one or more stages and recycling at least a portion of the purified diluent gas to the diluent pump, with the fluorochemicals in the purge stream from the adsorption unit being further purified by distillation and the diluent-rich stream from the purification also recycled to the vacuum pump; and (3) passing the stream through a cryogenic distillation unit to produce a diluent-rich stream, which is recycled back to the vacuum pump, and a product stream, which is enriched in fluorochemicals.

In all of the above schemes make-up diluent can be added to the vacuum pump as needed. Recycling of the diluent to the vacuum pump reduces the capital cost of the separation unit and the operating cost of the compressor as well as the need for additional diluent.

Processes according to the invention provide for recovery of all of the high value fluorinated chemicals while reducing emission of global warming gases.

The present invention has been set forth with regard to several preferred embodiments, but numerous modifications and variations can be made without departing from the scope of the invention as defined by the following claims.

## Claims

1. A process for the separation and recovery of a fluorochemical from a feed gas stream containing a diluent gas and the fluorochemical comprising pumping the feed gas stream through a vacuum pump using a vacuum pump diluent, compressing the diluted feed gas stream and separating the compressed gas into one or more diluent-rich streams and a fluorocarbon-rich stream, characterised in that said vacuum pump diluent comprises at least one of said diluent-rich streams.

2. A process as claimed in Claim 1, wherein the compressed gas mixture is separated in a membrane system in one or more stages, where the membrane(s) is selectively more permeable to the diluent gas than the fluorochemicals, to result in a recycle permeate stream rich in diluent gas and retentate rich in fluorochemicals, and thereafter the retentate is purified by distillation or adsorption resulting in a product stream enriched in fluorochemicals and a recycle purified diluent stream, said recycle streams being recycled to the vacuum pump.

3. A process as claimed in Claim 1, wherein the compressed gas mixture is separated by adsorption and subsequent distillation and a vent stream from the adsorption and purified diluent from the distillation are recycled to the vacuum pump.

4. A process as claimed in Claim 1, wherein the compressed gas mixture is separated by cryogenic distillation and the resultant enriched diluent stream recycled to the vacuum pump.

5. A process as claimed in Claim 1 for the separation and recovery of fluorochemical from a gas stream containing a diluent gas and fluorochemical by contact of the gas stream with a membrane, comprising the steps of:
(i) pumping the feed gas stream through a vacuum pump using a vacuum pump diluent;
(ii) compressing the diluted feed gas stream to an elevated pressure;
(iii) contacting the compressed gas stream with a membrane system containing one or more stages to produce a permeate stream rich in the diluent gas and a retentate rich in the fluorochemical;
(iv) purifying the retentate by a process selected from distillation and adsorption to produce a product stream richer in fluorochemical and a recycle stream rich in diluent gas
(v) recycling the permeate stream and the recycle stream to the vacuum pump .

6. A process as claimed in Claim 5, wherein the membrane separation of step (iii) is conducted at an elevated temperature sufficient to increase the flux of the permeate stream and to increase the membrane selectivity for the permeation of the diluent gas relative to the permeation of the fluorochemical.

7. A process as claimed in Claim 6, wherein said elevated temperature is provided by heating the diluted feed stream.

8. A process as claimed in Claim 6 or Claim 7, wherein said elevated temperature is in the range 35°C to 95°C (100-200°F).

9. A process as claimed in Claim 8, wherein said elevated temperature is about 65°C (150°F).

10. A process as claimed in any one of the preceding claims, wherein membrane separation is conducted at a pressure greater than 475 kPa (70 psig).

11. A process as claimed in Claim 10, wherein said pressure is in the range 700-1400 kPa (100-200 psig).

12. A process as claimed in any one Claims 2 and 5 to 11, wherein the membrane(s) are selected from polysulphone, polyetherimide, polypropylene, cellulose acetate, polymethylpentane, amorphous copolymers based on 2,2-bistrifluoromethyl-4,5-difluoro-1,3-dioxole, polyvinyltrimethylsilane, polyimide, polyamide, polyaramide, ethyl cellulose and mixtures thereof.

13. A process as claimed in any one of Claims 2 and 5 to 12, wherein the purifying step is carried out by distillation.

14. A process as claimed in Claim 1 for the separation and recovery of fluorochemical from a gas stream containing a diluent gas and fluorochemical by adsorption, comprising the steps of:
(i) pumping the feed gas stream through a vacuum pump using a vacuum pump diluent;
(ii) compressing the diluted feed gas stream to an elevated pressure;
(iii) passing said compressed gas stream through an adsorption system having one or more stages, and containing an adsorbent of the type to adsorb said fluorochemical leaving a purified vent stream rich in said diluent gas;
(iv) desorbing said fluorochemicals from said adsorbent to produce a fluorochemical-rich stream;
(v) compressing said fluorochemical-rich stream;
(vi) purifying said compressed fluorochemical-rich stream by distillation to produce a fluorochemical product stream and a diluent-rich recycle stream; and
(vii) recycling said vent stream and said diluent-rich recycle stream to the vacuum pump.

15. A process as claimed in Claim 14, wherein the adsorption system is one of pressure-swing, vacuum-swing or temperature-swing.

16. A process as claimed in Claim 1 for the separation and recovery of fluorochemical from a gas stream containing a diluent gas and fluorochemical by distillation, comprising the steps of:
(i) pumping the feed gas stream through a vacuum pump using a vacuum pump diluent;
(ii) compressing the dilute feed gas stream to an elevated pressure;
(iii) liquefying said compressed gas stream by heat exchange in a cryogenic distillation unit;
(iv) separating a diluent-rich stream from a product stream rich in fluorochemicals by cryogenic distillation;
(v) withdrawing said diluent-rich stream from said distillation step and recycling said diluent-rich stream to the vacuum pump; and
(vi) withdrawing said stream rich in the fluorochemical from said distillation step as a product stream.

17. A process for the separation and recovery of fluorochemicals from a gas stream containing a diluent gas and fluorochemicals by contact of the gas stream with a membrane, comprising the steps of:
(a) compressing a gas stream continuing a diluent gas and fluorochemicals to an elevated pressure;
(b) heating the gas stream containing a diluent gas and fluorochemicals to an elevated temperature sufficient to increase the flux of the permeate stream of step (c) and to increase the selectivity of the membrane of step (c) for the permeation of the diluent gas of step (c) relative to the permeation of the fluorochemicals of step (c);
(c) contacting the gas stream with a membrane system containing one or more stages to produce a permeate stream rich in the diluent gas and a retentate rich in fluorochemicals;
(d) purifying the retentate by a process selected from the group consisting of distillation and adsorption to produce a product stream richer in fluorochemical and a recycle stream rich in diluent gas
(e) recycling the permeate stream and the recycle stream for use as the diluent gas which is combined with the gas stream containing diluent gas and fluorochemicals, the combined stream, after scrubbing, being the stream supplied to step (a) to be compressed to an elevated pressure.

18. A process for the separation and recovery of fluorochemicals from a gas stream containing a diluent gas and fluorochemicals by contact of the gas stream with an adsorption unit, comprising the steps of:
(a) compressing a gas stream containing a diluent gas and fluorochemicals to an elevated pressure;
(b) passing said compressed gas stream containing a diluent gas and fluorochemicals through an adsorption system having one or more stages, and containing an adsorbent of the type to adsorb said fluorochemicals leaving a purified vent stream rich in said diluent gas;
(c) desorbing said fluorochemicals from said adsorbent to produce a fluorochemical rich stream;
(d) compressing said fluorochemical rich stream;
(e) purifying said compressed fluorochemical rich stream by distillation to produce a fluorochemical product stream and a diluent rich recycle stream; and
(f) recycling said vent stream and said diluent rich recycle stream for use as the diluent gas which is combined with the gas stream containing diluent gas and fluorochemicals, the combined stream, after scrubbing being the stream supplied to step (a) to be compressed to an elevated pressure.

19. A process for the separation and recovery of fluorochemicals from a gas stream containing a diluent gas and fluorochemicals by distillation, comprising the steps of:
(a) compressing a gas stream containing a diluent gas and fluorochemicals to an elevated pressure;
(b) liquefying said compressed gas stream containing a diluent gas and fluorochemicals by heat exchange in a cryogenic distillation unit;
(c) separating a diluent rich stream from a product stream rich in fluorochemicals by cryogenic distillation;
(d) withdrawing said diluent rich stream from said distillation step and recycling said diluent rich stream for use as the diluent gas which after being combined with the gas stream containing diluent gas and fluorochemicals the combined stream, after scrubbing, being the stream supplied to step (a) to be compressed to an elevated pressure; and
(e) withdrawing said stream rich in fluorochemicals from said distillation step as a product stream.

20. A process as claimed in any one of the preceding claims, wherein the feed gas stream is initially scrubbed to remove particulates and water soluble components before dilution with the recycle diluent.

21. A process as claimed in any one of the preceding claims, wherein the gas stream containing a diluent gas and fluorochemicals contains fluorochemicals selected from NF3, SF6, CF4, CHF3, CH3F, C2F6, C2HF5, C3F8, C4F8 and mixtures thereof.

22. A process as claimed in Claim 21, wherein the product stream comprises C₂F₆.

23. A process as claimed in any one of the preceding claims, wherein the gas stream containing a diluent gas and fluorochemicals is an effluent gas stream from a semiconductor fabrication process.

24. A process as claimed in any one of the preceding claims, wherein the diluted feed stream is scrubbed before compression.

25. A process as claimed in any one of the preceding claims, wherein the diluent gas is nitrogen.
